# EUROPEAN PATENT SPECIFICATION

(11) **EP 0 727 880 B1**
(45) Date of publication and mention of the grant of the patent: **23.04.2003**
(21) Application number: 96200353.9
(22) Date of filing: 14.02.1996
(51) Int. Cl.: E05B 49/00, H04B 1/00

(54) **Improved remote control system, for transmitting coded signals, provided with a service transmitter able to selflearn codes from other transmitters**
Fernsteuersystem zum Senden von Kodesignalen mit einem Hilfssender, der von anderen Sendern Kodes selbst lernt
Système de télécommande pour transmettre des signaux codés avec un émetteur auxiliaire qui apprend des codes des autres émetteurs

(30) Priority: 17.02.1995 IT TV950017
(43) Date of publication of application: 21.08.1996
(73) Proprietor: NICE SpA, 31046 Oderzo (Treviso) (IT)
(72) Inventor: Marchetto, Oscar, I-31046 Oderzo (Treviso) (IT); Tomasella, Sergio, I-31020 San Polo di Piave (Treviso) (IT)
(74) Representative: Dragotti, Gianfranco

(56) References cited:
- EP-A- 0 153 499
- EP-A- 0 590 385
- DE-A- 3 520 397

## Description

The present invention relates to a service transmitter for remote controls comprised of a keyboard or push-button set, able to control, either directly or via radio, access gates through the use of a selflearned code, being said code learned by the transmitter in a secret way, that is not disclosable to people actuating the code selflearning operation by the transmitter itself.

Remote controls, usually via radio, are well known and used to control the actuation, by authorized people, of access barriers, such as gates, doors or bascule bars. It is well known how to actuate these controls by means of coded digital signals allowing just authorized peolpe to open the barriers themselves.

For example, the Italian patent application No. TV94A000070, filed on June 16, 1994 in the name of the present applicant, discloses just an example of such a kind of remote control expected to use transmitters, emitting one or more coded signals, to be recognized by a receiver, being said receiver, interfaced with electromechanical drive means, provided with storing means able to have stored preset codes to be recognized, delete, on request, some or all the codes and store new codes.

European patent EP 0 590 385, discloses a remote control system wherein a single remote control transmitter can address a plurality of remote control receivers and a single remote control receiver can be addressed by a plurality of remote control transmitters; this is accomplished thanks to a remote control transmitter comprising a memory where different programmable codes can be stored and selection means controllable by, for example, a keyboard for selecting one of the codes to be used for generating and transmitting a transmission signal.

In the above mentioned patent application is just disclosed an improved remote control system for transmitting and receiving signals with the possibility of learning, by the receiving section thereof, new codes sent by a transmitter.

Now it arises the problem that, if it is desired to add a new code among those stored in the suitable memory of the receiver (a non-volatile memory, such as an EEPROM or a RAM provided with buffer battery), it would need to have available the transmitter containing the specified code. Unfortunately that cannot be possible for many reasons: for example, the owner of the specifical transmitter could be away or, for some reason connected with delivery times, could not have available the transmitter with the specific code, so that, to write the new code into the non-volatile memory of the receiver, it would have to wait for having available said specific transmitter.

Or, it may happen that for some reason, such as maintenance or repairing works to be done in a condominium, home moving, either merchandise or furniture delivery and withdrawal, or the like, it is to allow an extraordinary access to service personnel appointed to these works. A way for allowing this access to people usually not having any device provided with a code recognized by the receiver of the remote control is to load into the present service transmitter a code of a transmitter owned by one of the people authorized to use that remote control, to give this code a dial number and to have the service transmitter at the disposall of this service personnel which can open the gate or barrier according to the needs of the work to be done simply by typing on the keyboard of the service transmitter the given dial number.

For the above mentioned objects, it is proved particularly useful a remote control system provided with a service device having the features set out in independent claim 1.

The service device is, in fact, a service transmitter and, in the following, it will be referenced with either names.

Shortly stated, a service device according to the present invention comprises a microprocessor, a transmission unit, a broad band and low gain receiver able to receive coded radio signals and to detect their codes, a non-volatile memory able to store a code detected by the device receiver, a push button assembly able to send control signals to the microprocessor for giving directions relating to code reception by the device receiver, code record into the device memory, code deletion from the device memory of preceding no more useful codes and reading of codes stored into the device memory for their sending with a remote control signal to the transmission unit in order to forward them as new codes to be stored into the non-volatile memory of a remote control receiver.

Of course, if the code inserted in the service transmitter is one of those already stored in the remote control receiver, there is no need to add it into the non-volatile memory of the receiver itself.

Preferably, the push button set consits of a keyboard, similar to those used for the dialling of phone numbers, on which can be typed numbers corresponding to operations to be carried out by the service transmitter.

Alternatively, the push button set consists of a plurality of single push buttons anyone devoted to an operation to be carried out.

Particularly, the transmission unit consits of a radio transmitter, amplitude modulated by the coded signal, coming from an output of the microprocessor and wanted to be transmitted, feeding a radio antenna incorporated in the service transmitter itself.

Alternatively, the transmitting unit consists of a buffer amplifier, connected to the output of the microprocessor emitting the coded signal to be transmitted, suited to send the pulses of the coded signal on a cable or twin line for telecommunication.

Additionally, the microprocessor has another output used for enabling the operation of a buzzer informing about the actuation of a key of the keyboard.

Further additionally, the microprocessor has another output used for enabling the operation of lighting means illuminating the keyboard when anyone of the keys is actuated.

Preferably, the above mentioned lighting means consist of an assembly of light emitting diodes (LED) driven by a transistor controlled by the output enabling the lighting means.

Additionally, the transistor itself driving the light emitting diodes also enables the power supply of the broad band and low gain receiver contained in the service transmitter.

Particularly, the broad band and low gain receiver consists of a RF signal aperiodic amplifier followed by a detector and a buffer amplifier suited for transforming a detected coded signal into square wave signal useble as a code in digital form.

Also particularly, the radio transmitter used as transmission unit consists of a drive oscillator controlled by a piezoelectric quartz, of a modulator/manipulator controlled by the coded digital signal and of a RF power amplifier stage feeding a transmitting antenna.

Preferably the transmitting antenna simply consists of an induttance and capacity resonating circuit of which the inductive component operates as an antenna because it consists of an inductor having sufficient stray inductance to operate as a radiating antenna.

The features of the present invention are defined in the claims forming the concluding portion of the description. However, further features and advantages thereof will be apreciated from the follwing detailed description of an ebodiment, not to be considered in a limiting way, provided with the enclosed drawings, in which:
- Figure 1 is a general diagram of a remote control for gates and/or barriers containing the service keyboard device according to the present invention;
- Figure 2 is a block diagram of an embodiment of the service device according to the present invention;
- Figure 3 is a more detailed diagram of the control, memory and transmission portions of a first embodiment of the service device disclosed by the block diagram of figure 2;
- Figure 4 is a more detailed diagram of the same portions of a second embodiment of the service device disclosed by the block diagram of figure 2;
- Figure 5 is a more detailed diagram of the same portions of a third embodiment of the service device disclosed by the block diagram of figure 2;
- Figure 6 is a detailed electric diagram of a first embodiment of a broad band and low gain receiver to be used in the service device of the block diagram of figure 2 in the hypotesis of the use of positive logics;
- Figure 7 is a detailed electric diagram of a second embodiment of a broad band and low gain receiver to be used in the service device of the block diagram of figure 2 in the hypotesis of the use of negative logics;
- Figure 8 is a detailed electric diagram of a radio transmitter to be used in the first and third embodiment of the service device of the block diagram of figure 2, shown in more detail in the figures 3 and 5;
- Figure 9 is an assembly frame depicting how are each other combined the two flow charts of the figures 10 and 11;
- Figure 10 a first portion of a flow chart regarding the keyboard control and code transmission to gate and barrier actuators; and
- Figure 11 a second portion of a flow chart regarding the composition of the operation code for replacing installation and access codes and for storing one or more codes, coming through radio signals, by means of the keys appointed for opening, closing operations or the like.

In all the here above listed figures equal or strictly similar members have been indicated by equal numerals.

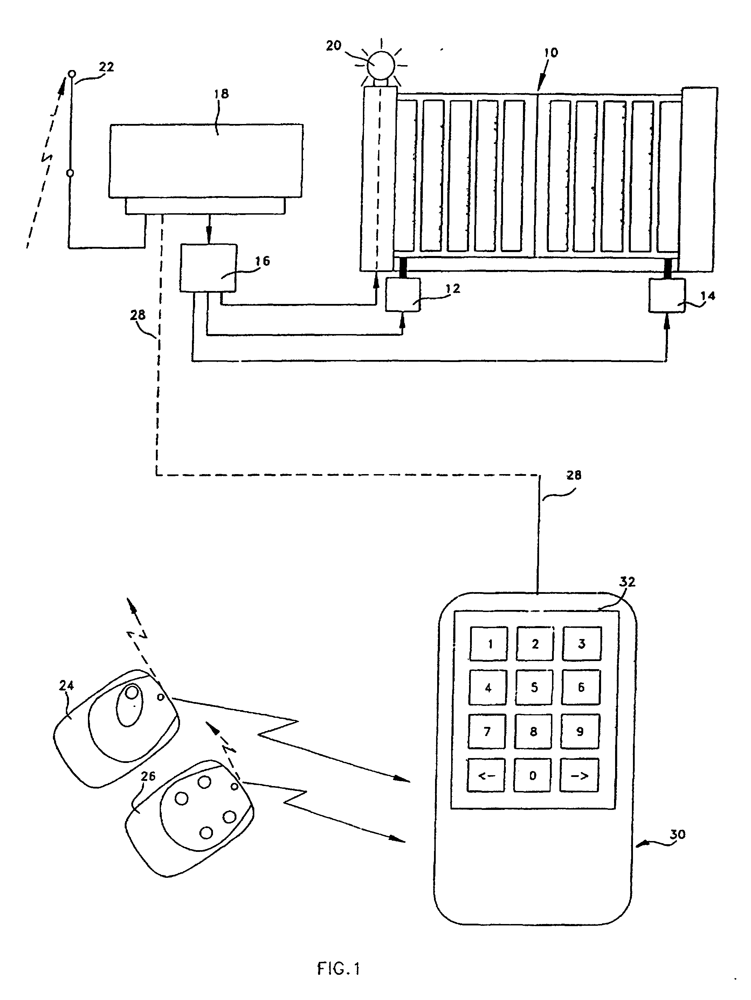

Looking firstly at figure 1, it is seen that, how it is well known, a gate 10, or similar movable barrier, to be remotely controlled, is actuated by motor assemblies 12 and 14 which through a buffering interface 16, containing proper relays or the like, receive control signals from a coded signal receiver 18. Of course, the same interface 16 controls also possible warning devices, such as the flashing lamp 20 indicated in the same figure 1.

The receiver 18 can receive, through an antenna 22, radio signals coming from remote control radio transmitters, such as the radio transmitters 24 and 26 according to what has been already depicted and disclosed in the above mentioned Italian patent application No. TV94000070 to which reference is made. Futher, the receiver 18 itself can receive, both via cable 28 and via radio, through the antenna 22 itself, control signals from a service device 30 provided with digital keyboard 32 by which can be dialed combinations of two, three or more digits corresponding to codes recognizable by the receiver 18.

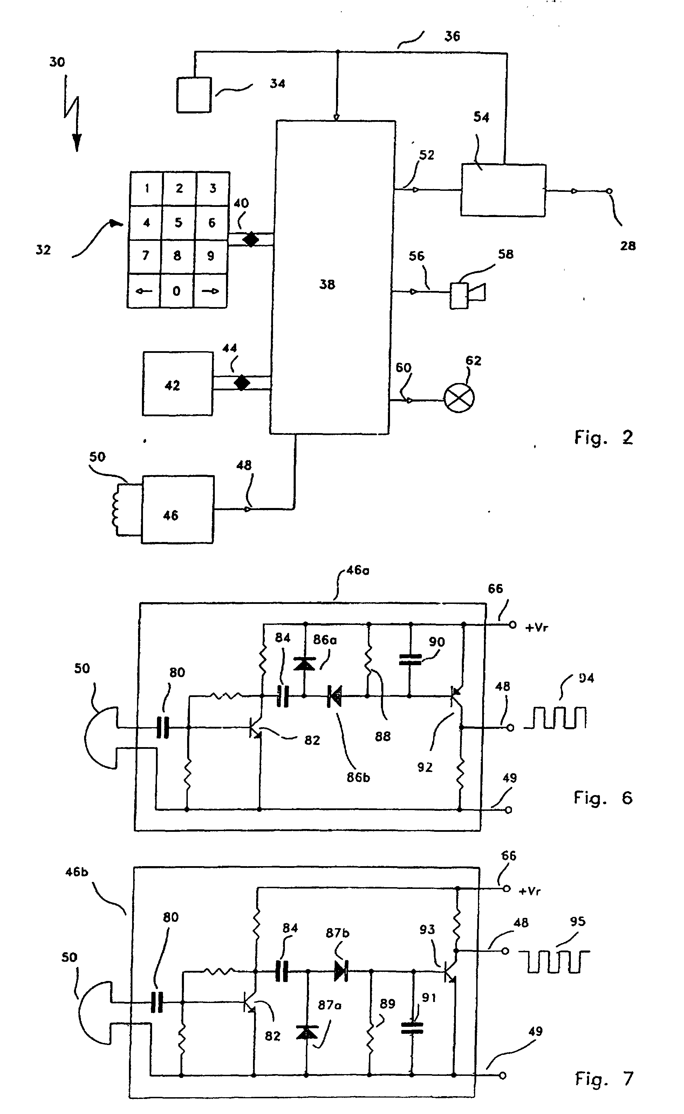

Looking now at figure 2, it is seen that a keyboard service device 30, according to the present invention, comprises the above mentioned keyboard 32, a supply means 34 which, according to a movable or fixed device, consists either of a power supply from an electric network or a battery, supply connections 36 for the components of the device 30, a microcontroller 38 connected, through a bus 40, with the keyboard 32 itself, a EEPROM memory 42 connected through a bus 44 to the microcontroller 38 and a radio receiver 46, connected to the microcontroller 38 by means of at least a conductor 48, and provided with a receiving antenna 50 as a planar coil or frame for short distance broad band reception.

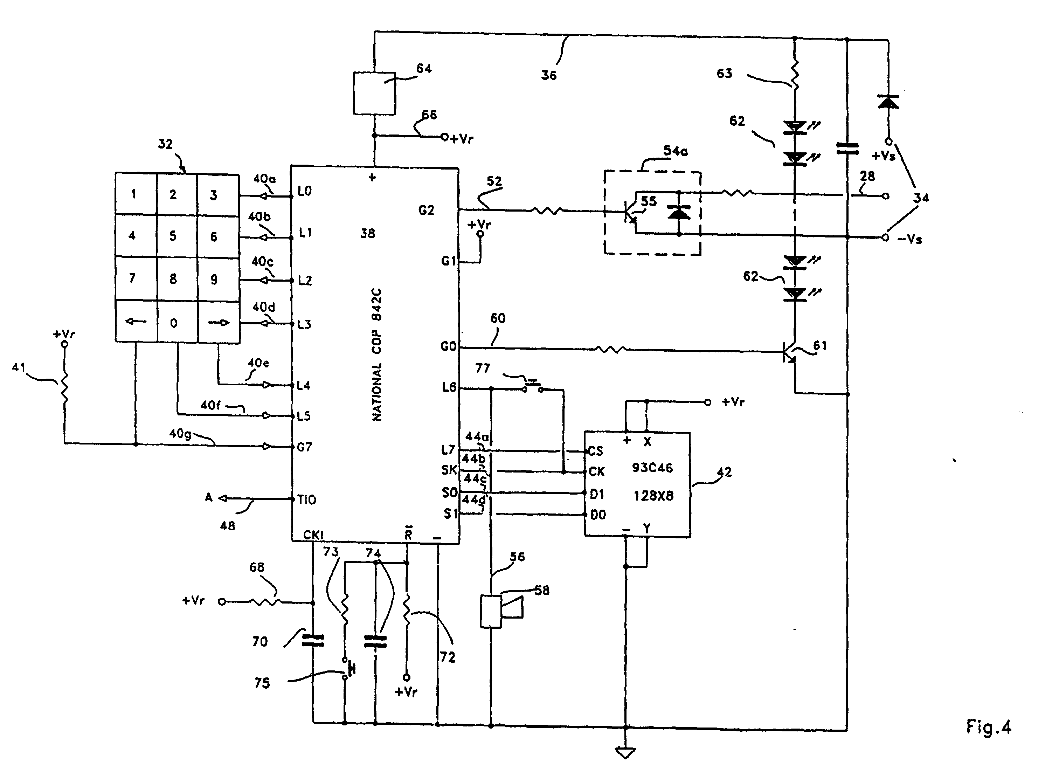

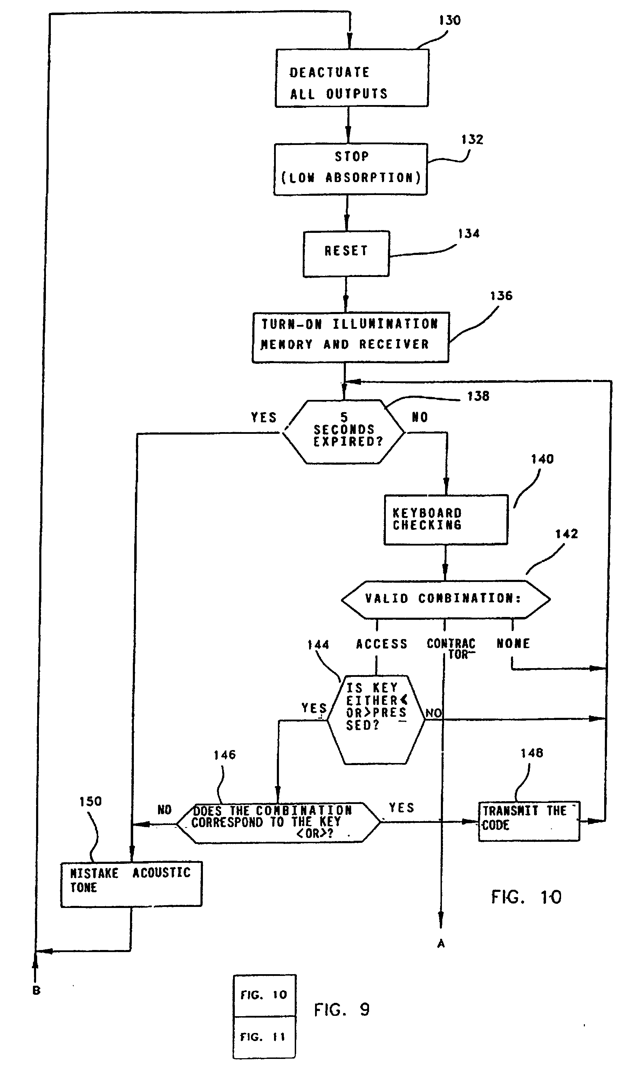

From the microcontroller 38 itself comes out a connection 52 to a transmission unit 54 which can be a buffer amplifier for transmitting via either cable or twin line, as depicted in figure 4, or a radio transmitter, having, amplitude modulated carrier, as depicted in figure 8.

Also from the controller 38 comes out a connection 56 to an acoustic alarm 58, which in the present embodiment is one of the buzzers, having piezoelectric electro-acoustic member, so known by those skilled in the art, and a connection 60 to illuminating means 62 having the duty to illuminate the keyboard 32 to allow the proper view thereof also in case of poor or lacking room illumination.

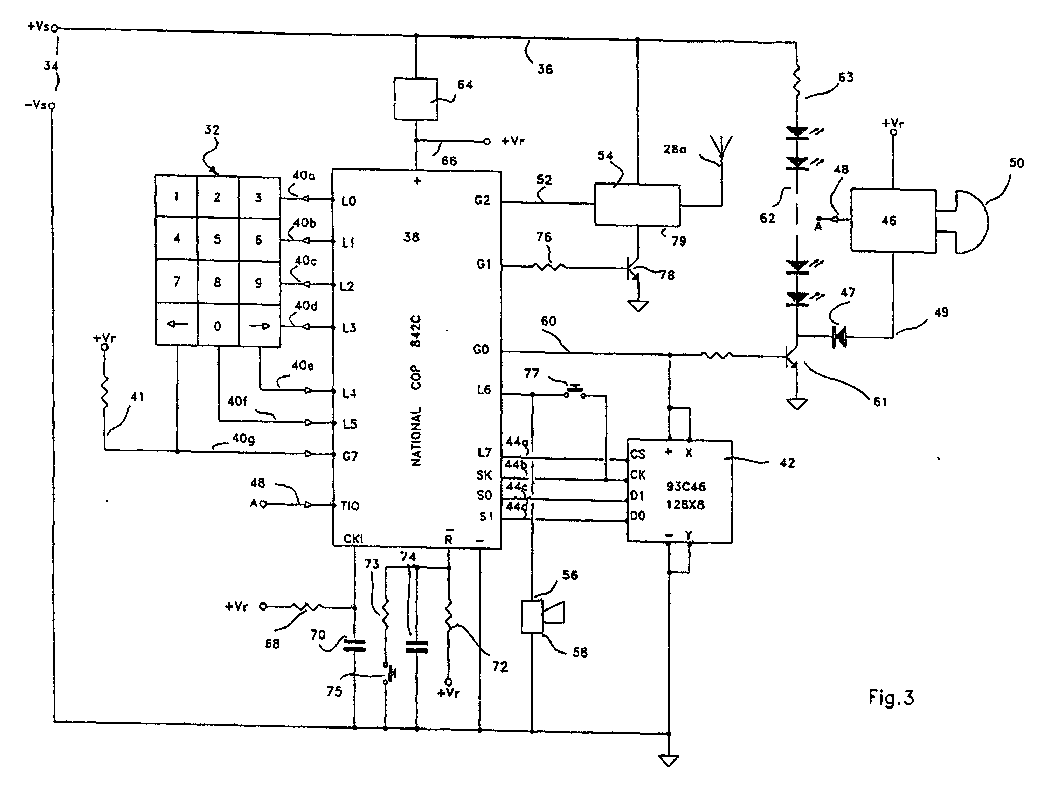

Referring to figure 3, depicting a detailed diagram of the control, memory and transmission portions of a first embodiment of the device depicted in the block diagram of figure 2, it is seen that as a microcontroller 38 is used a microprocessor National 842C having I/O ports L0 to L5 and G7 used for sending, by means of conductors 40a-d, and for receiving, through conductors 40e-g, data between the microprocessor 38 and the keyboard 32, the conductors 40e-g connecting output conductors from the keyboard 32 to ports L4, L5 and G7 of the microprocessor 38, being the port G7 maintained to d. c. supply voltage by a pull-up resistor 41. A pin T10 of the microprocessor 38 is connected to the output conductor 48 from the broad band and low gain radio receiver 46 for receiving signals radiated near the service device 30, having a keyboard, by one of the remote control radio transmitters 24 or 26 (see figure 1).

To the output pin G2 is connected a conductor 52 extending to the input of the transmitting unit 54 feeding an output, which in such a case is a transmitting antenna 28a, because the radio transmission unit 54 is a radio transmitter. Another output pin G1 is connected through a resistor 76 to the basis of a transistor 78, which, by means of a connection 79, assures supply of the transmission unit 54 just when transmission is required, removing the supply from the unit 54 when no transmission of control signals is required, thus limiting power absorption from the power supply to prevent uncontrolled power absorptions in the case of battery supplied devices.

A third output pin G0 provides to send, through the conductor 60, a control signal to a transistor 61 having the collector connected to a series of light emitting diodes (LED) 62 in turn connected through a current limiting resistor 63 to the supply conductor 36, this output pin G0 presenting an active signal when one of the keys of the keyboard 32 is actuated to allow the illumination thereof by means of the LEDs 62 and the enabling of the radio receiver 46 by ground connection of a supply conductor 49 through a diode 47 and the transistor 61 itself.

The microprocessor 38 is supplied in stabilized manner through a stabilizer circuit 64 supplying on a line 66 a stabile voltage +Vᵣ substantially independent from the supply voltage Vₛ on the line 36, coming from the power supply 34. This line 66 supplies also a timing network comprised of a resistor 68 and a capacitor 70 connected to a clock pin CK_{I} of the microprocessor itself, being this network so sized to allow a clock frequency between one and two megacycles. Also to the line 66 is connected a second network formed by a resistor 72 and a capacitor 74 to provide a resetting pin R of the microprocessor 38 with a signal assuring the reset of all the operations thereof at the turning on. The resetting pin R itself is also connected through a resistor 73 to a normally open contact pair 75, actuated by a manual push button providing to close the contact pair 75 itself and reset the microprocessor 38 any time the keyboard 32 is to be used. The manual push button for the contact pair 75 could be one of the keys of the keyboard (for example the key "0") or a separated key placed immediately near the keyborad.

The conductor 60 itself supplies also the EEPROM 42, which is actuated by just at least one key of the keyboard 32, being said memory 42 connected through conductors 44a-d to the pins L7, SK, S0 and S1 of the microprocessor 38 to allow the writing of code data into the memory 42 and subsequent reading thereof, when required to the microprocessor 38 by a corresponding number dialled on the keyboard 32.

A pin L6 of the microprocessor 38 is connected by means of a conductor 56 to the buzzer 58 for acoustically signalling the actuation of one of the keys of the keyboard 32. A contact pair 77, connected from pin L6 of the microprocessor 38 to an input Cₖ of the EEPROM memory 42, and manually actuable, allows a complete resetting of the memory 42 on demand of the contractor, for example for proceding to a replacement of all the codes inserted into the memory 42. Of course, the manual push button for actuating the contact pair 77 does not have to be accessible by the usual user of the service device 10, but just by the contractor to avoid misuse and control mistakes.

Let's refer to figure 4, showing a detailed diagram of the control, memory and transmission portions of a second embodiment of the device depicted in the block diagram of figure 2. This diagram differs from that depicted in figure 3 just in some particulars because the service device of this second embodiment is connected to the reciver 18 of figure 1 by means of a cable or twin line 28 and does not receive the codes to be selflearned from a radio receiver but they are directly inserted through a conductor 48 connected to the pin T10. Moreover, the transmission unit 54a is not a radio transmitter but is reduced to a simple transistor 55 buffering the output of the pin G2 of the microprocessor 38 to the line 28, the power supply 34 is not from a separated battery, but comes through the conductors, marked +Vs and -Vs, from the general d. c. power supply of the receiver 18 itself and, as there is not need to turn off the transmitting unit 54 when the keyboard 32 is not actuated, the output of the pin G1 of the microprocessor 38 is simply connected to the stabilized voltage +Vᵣ. for the same reason, the power supply of the EEPROM 42 can be permanentely assured through connection to the stabilized voltage +Vᵣ, instead of being drawn from the pin G0 of the microprocessor, just serving in such a case to drive the base of the transistor 61 controlling the LEDs 62 for illuminating the keyboard. As regards the remainder, the second embodiment is composed and works as the first one.

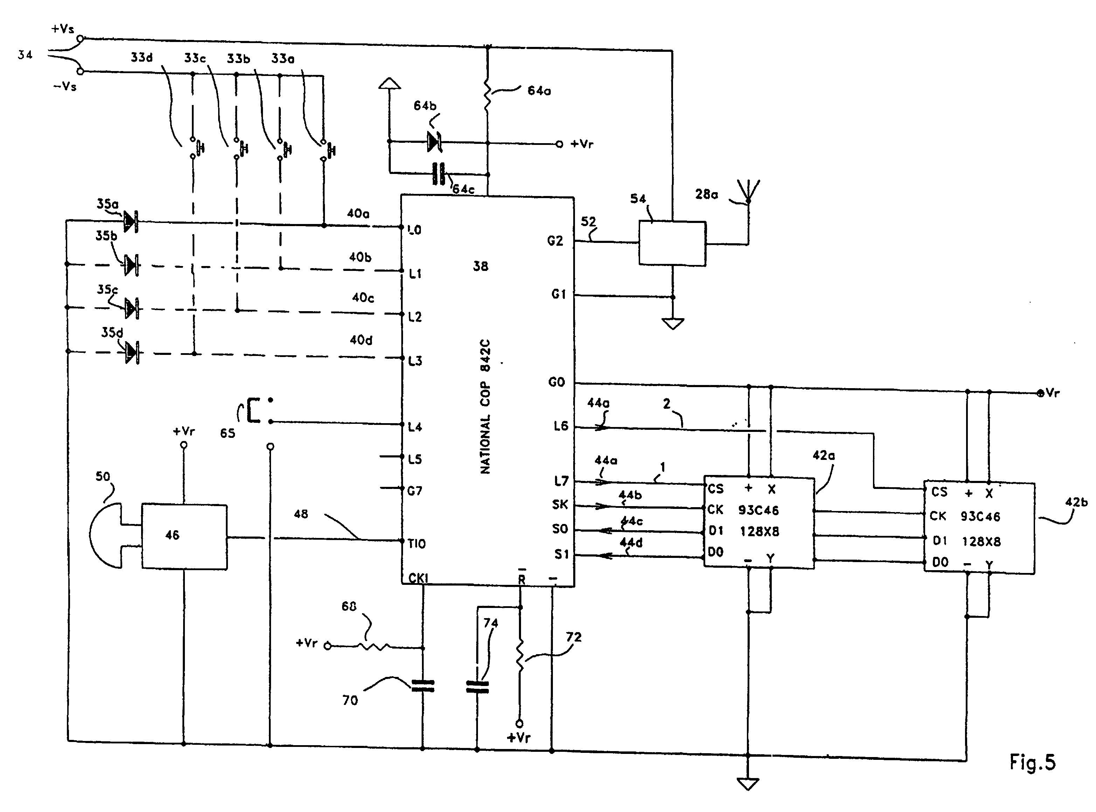

Let's refer to figure 5, showing a detailed diagram of the control, memory and transmission portions of a third embodiment of the device depicted in the block diagram of figure 2. This third embodiment is very similar to the first embodiment of figure 3 but differs therefrom because instead of the keyboard 32 uses one or more push buttons 33a - 33d serving to insert signals into the ports L0 - L3 operating as selecting inputs and, simultaneously, operating as supply switches thanks to diodes 35a -35d connected between the terminal -Vₛ of the power supply and ground.

Further, as the number of the codes to be selflearned in such a case can be the double of that to be be selflearned in the embodiments depicted in the figures 3 and 4, it is to double the number of available EEPROMs here indicated by the numerals 42a and 42b. In addition, to allow the record of the codes to be selflearned, a jumper 65, connected inside the device and actuable by just a contractor, connects to ground the port L4 just for the time necessary to the record of the code to be selflearned into one of the EEPROMs 42a or 42b.

Let's now refer to the two kinds of radio receivers 46a and 46b depicted in the figures 6 and 7, respectively, of which the first one provides codes in positive logics and the second one codes in negative logics, being to be intended that there is to use either the one or the other according to the kind of logics accepted by the microprocessor 38.

The radio receiver 46a of figure 6 comprises an antenna 50, which for practical purposes consists of a track properly folded and developped on a printed circuit board, coupled through a capacitor 80 to a high frequency aperiodic amplifier formed by a suitable transistor 82 and by a per se well known resistive network for the operation of the aperiodic amplifier. The aperiodic amplifier is, in turn, coupled through a capacitor 84 to a detector circuit formed by two diodes 86a and 86b and by a network of a resistor 88 and a capacitor 90, serving to eliminate any trace of RF signals, to the base of a PNP transistor 92 on the collector of which appears, as detected signal, amplified to substantially swing between ground voltage and supply voltage, a burst 94 of square pulses, representing the proper code of one of the portable remote control transmitters 24 or 26 of figure 1, which is sent on the conductor 48 to be inserted into the input pin T10 of the microprocessor 38. In this first receiver 46a is emploied a transistor PNP 92, obviously connected to have as ground conductor the conductor 66 of the stabilized supply, because whenever the transistor 92 is saturated by the detected signal on the collector thereof is formed a high voltage signal, or logical "1", serving as a code of positive logics for the microprocessor 38, as indicated by the pulse burst 94 associated to the output conductor 48.

The radio receiver 46b of figure 7 comprises, as the radio receiver 46a of figure 6, an antenna 50 and a high frequency aperiodic amplifier formed by a transistor 82 and by a resistive network substantially similar to the aperiodic amplifier of the receiver 46a of figure 6. Of course, the aperiodic amplifier is coupled through a capacitor 84 to a detector circuit formed by two diodes 87a and 87b and by a network of a resistor 89 and a capacitor 91, serving to eliminate any trace of RF signals, to the base of a NPN transistor 93 on the collector of which appears, as a detected signal and amplified for substantially swinging between supply voltage and ground voltage, a burst 95 of square pulses, costituting the proper code of one of the portable remote control transmitters 24 or 26 of figure 1, which is sent on the conductor 48 to be inserted into the input pin T10 of the microprocessor 38. In this second receiver 46b is emploied a NPN transistor 93, because any time that the transistor 93 is saturated by the detected signal on the collector thereof is formed a low voltage signal, or logical "0", serving as a code of negative logics for the microprocessor 38, as indicated by the burst 95 of negative pulses associated to the output conductor 48.

A radio transmission unit 54b is depicted in figure 8. This unit 54b is very similar to the radio transmission unit depicted in the Italian patent application No. TV94000070 to which reference is made for a full comprehension thereof.

Similarly to what depicted in the above mentioned patent application, the radio transmission unit 54b consists of a Colpitts oscillator 110 controlled by a piezoelectric quartz 112 driving a transistor 113 sending the generated RF signal to a modulator/manipulator circuit 114 providing to manipulate the radio carrier generated by the Colpitts oscillator through a transistor 115 driven by the coded signal 102 coming from the microprocessor 38. The modulator/manipulator circuit 114 provides the carrier frequency, manipulated by the coded signal 102, to a final power stage 116 comprising a transistor 117 for very high frequencies (VHF - UHF) which drives a resonating circuit 118 operating as a transmitting antenna tunable by means of the variable capacitor 120.

This radio transmission unit 54b provides to forward, via radio, the signals coming from the keyboard service device 30, to the remote control receiver 18 itself, by sending the radio signals to the antenna 22 thereof.

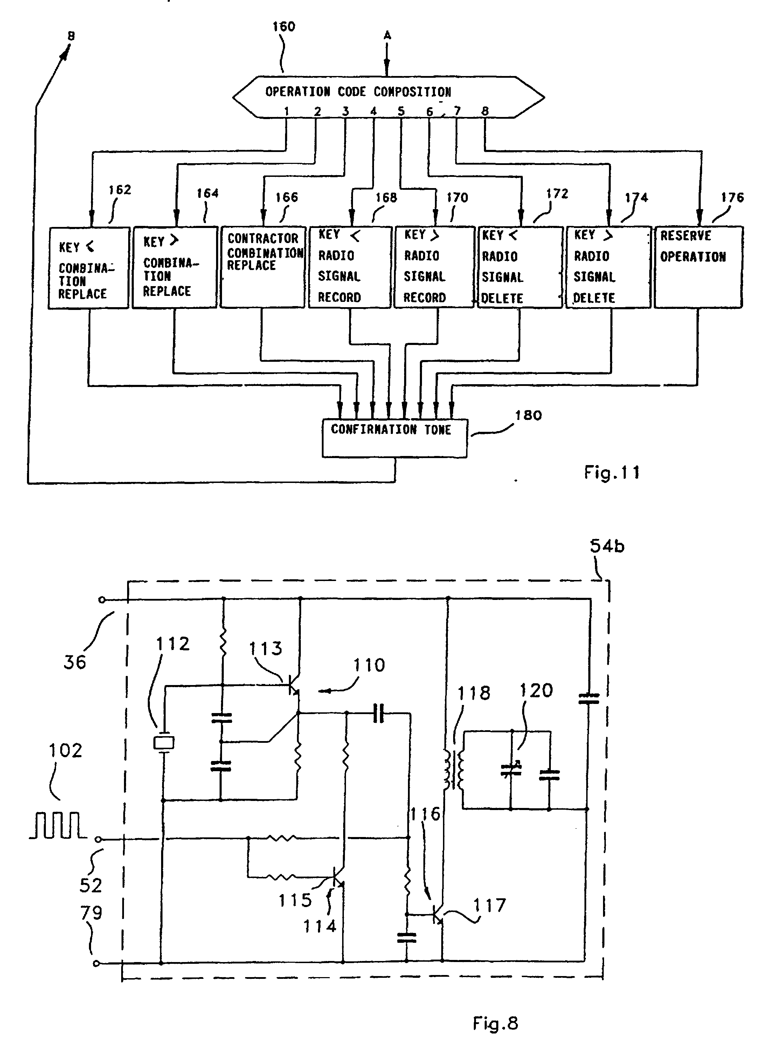

The operation of the service device according to the invention can be understood referring to the flow chart depicted in figures 10 and 11, assembled as indicated in figure 9.

Firstly, is effected in the operation step 130 a deactuation of all the outputs of the microprocessor to avoid any erroneous control. To that it follows a stop operation step 132 inibiting the power supply of all the portions, such as the transmitter, the receiver and the non-volatile memory, which are peripheral units of the microprocessor, actuating a reduced power absorption of the service transmitter. The operation starting of the service transmitter happens through the operation step 134 resetting the microprocessor, as a consequence of the actuation of a key of the keyboard which could be the key "0" thereof or a nearby separated key. To this operation it follows the operation of the step 136 turning-on the illumination (due to the LEDs), the memory and the low gain receiver. To this step 136 it follows a decision step 138 to see if a 5 second time expired. If this time is not expired, it follows an operation step 140 for keyboard checking from which it descend a decision step 142 of valid combination for access codes, for contractor code or none valid combination. If none combination is valid, the program comes back to the step 138 to see wether some other operation is started before the expiry of the 5 second time, in which case the keyboard checking 140 and the valid combination 142 steps are repeated. From the check 142 of valid combination can result a contractor combination, i. e. a digit combination serving to the personnel of installation and maintenance service to be recognized, in which case the program comes out from the connection A to prosecute in the program portion, depicted in figure 11, which will be later discussed. From the check 142 itself it can result an access combination by which one of the barrier opening or closing keys has to be actuated, as indicated in the decision step 144. If none of these two keys has been actuated (answer NO to the step 144), return is made to the waiting step 138, otherwise (answer YES to the step 144) there is to check in the decision step 146 wether the digit combination corresponds to one of the opening or closing keys, in which case (answer YES to the step 146) a code is transmitted by the operation step 148 and return is made to the waiting step 138. If the wait time of the step 138 expires without any operation (answer YES to the question wether 5 seconds are expired) the step 150 is reached for generating an acoustic tone, indicating a mistake, emitted by the buzzer itself. The step 150 is actuated even if the step 146 decides that the combination does not correspond to one of the closing or opening keys. After the emission of the mistake tone, return is made to the step 130 deactuating all the outputs to avoid erroneous controls. To the same step 130 comes back from a connection B the program procedure represented in the herebelow depicted figure 11.

Referring to figure 11, it is seen that if in the step 142 resulted a contractor combination, through the connection A the procedure prosecutes to a decision step 160 to choose the composition of a operation code to be executed. The operations have been indicated by the numerals 1 to 8, but could be indicated in any other way. For example, as here depicted, the operation No. 1 goes to the step 162 changing the combination for the gate opening key, the operation No. 2 goes to the step 164 changing the combination for the gate closing key, the operation No. 3 goes to the step 166 for changing the contractor combination, the operation No. 4 goes to the step 168 for recording a radio signal for the gate opening key, the operation No. 5 goes to the step 170 for recording a radio signal for the gate closing key, the operation No. 6 goes to the step 172 for deleting a radio signal for the gate opening key, the operation No. 7 goes to the step 174 for deleting a radio signal for the gate closing key and the operation No. 8 goes to the reserve step 176 assigned to some possible operation to be added. Of course, the so-called "opening" and "closing" keys could be used also for different operations. The conclusion of any of the operations of the steps 162 to 176 goes always to an operation step 180 emitting a confirmation tone informing about the done operation. After the confirmation there is to come out from the program through the connection B to come back to the step 130 deactuating the outputs as depicted in figure 10.

What has been hereabove stated just depicts some embodiments of the present invention, just given as illustrating and not limiting examples, and anyone skilled in the art will be able to devise equivalent substitutions and changes to be considered all here covered.

For example, instead of the radio or cable transmitters here depicted in the figures 3, 4, 5 and 8, could be emploied transmitters on optical carrier, propagated either freely or through optic fiber cables, as well as an ultrasonic carrier propagated either in free air or through a metal wire support having suitable features, such as a steel wire.

Consequentely, the coverage scope of the invention will be deilimitated by the enclosed claims.

## Claims

1. Remote control system comprising a remote control receiver (18) provided with a non-volatile memory, and **characterized by** been provided with a service device (30) comprising a microprocessor (38), a transmission unit (54), a broad band and low gain receiver (46) able to receive coded radio signals and to detect their codes, a non-volatile memory (42) able to store a code detected by the device receiver (46), a push button assembly (32, 33) able to send control signals to the microprocessor (38) for giving directions relating to code reception by the device receiver (46), code record into the device memory (42), code deletion from the device memory (42) of preceding no more useful codes and reading of codes stored into the device memory (42) for their sending with a remote control signal to the transmission unit (54) in order to forward them as new codes to be stored into the non-volatile memory of the remote control receiver (18).

2. Remote control system, as in claim 1, **characterized in that** the push button assembly consists of a keyboard (32), similar to the keyboards used for dialling phone numbers, on which can be typed numbers corresponding to operations to be executed by the service transmitter (30).

3. Remote control system, as in claim 1, **characterized in that** the push button assembly consists of a plurality of single push buttons (33a-d) anyone suited to an operation to be executed.

4. Remote control system, as in claims 2 and 3, **characterized in that** the transmission unit (54) consits of a radio transmitter (54b), amplitude modulated by the coded signal (102), coming from an output (52) of the microprocessor (38), and to be transmitted, feeding a radio antenna (28a) incorporated in the service transmitter (30) itself.

5. Remote control system, as in claims 2 and 3, **characterized in that** the transmission unit (54a) consists of a buffer amplifier (55), connected to the output of the microprocessor (38) emitting the coded signal (102) to be transmitted, suited for sending the pulses of the coded signal (102) on a cable or twin line (28) for telecommunication.

6. Remote control system, as in preceding claims, **characterized in that** the microprocessor (38) has another output (56) used for enabling the operation of a buzzer (58) informing about the operation of a key of the keyboard (32).

7. Remote control system, as in claim 6, **characterized in that** the microprocessor (38) has another output (60) used for enabling the operation of illuminating means (62) useful for illuminating the keyboard (32) when anyone of the keys thereof is operated.

8. Remote control system, as in claim 7, **characterized in that** the above mentioned illuminating means (62) consist of an assembly of light emitting diodes (LED) driven by a transistor (61) in turn driven by the output (60) enabling the illuminating means.

9. Remote control system, as in claim 8, **characterized in that** the transitor (61) driving the light emitting diodes (62) confirms also the power supply to the broad band and low gain receiver (46) contained in the service transmitter (30).

10. Remote control system, as in claims 1-4 and 6-8, **characterized in that** the broad band and low gain receiver consists of a radio frequency signal aperiodic amplifier (82) follwed by a detector (86, 87) and by a buffer (92, 93) able to transform a coded detected signal into a square wave signal (94, 95) usable as a digital code.

11. Remote control system, as in claims 1-4 and 6-10, **characterized in that** the radio transmitter (54b) used as transmission unit consists of a driving oscillator (110) frequency stabilized by a piezoelectric quartz (112), a modulator/manipulator (114) controlled by the coded digital signal (102) and a power radiofrequency amplifier (116) feeding a transmitting antenna (28a).

12. Remote control system, as in claim 11, **characterized in that** the transmitting antenna (28a) consists simply of a resonanting circuit (118) comprising an inductor and a capacitor (120), whose inductive component operates as an antenna because it consits of an inductor having sufficient stray inductance for operating as a radiating antenna.

## Patentansprüche

1. Fernsteuersystem mit einem Fernsteuerempfänger (18) der mit einem nicht flüchtigen Speicher versehen ist, und **gekennzeichnet durch** Versehen mit
einer Hilfseinrichtung (30) mit
einem Mikroprozessor (38), einer Übertragungseinheit (54), einem Breitband- und Niederverstärkungsempfänger (46), der in der Lage ist, kodierte Radiosignale zu empfangen und ihre Kodes zu erkennen, einem nichtflüchtigen Speicher (42), der in der Lage ist, einen **durch** den Einrichtungsempfänger (46) erkannten Kode zu speichern, einer Drucktastenanordnung (32, 33) die in der Lage ist, Steuersignale zu dem Mikroprozessor (38) zu senden, um Anweisungen zu geben, die sich auf Kodeempfang **durch** den Einrichtungsempfänger (46), Kodeaufzeichnung in den Einrichtungsspeicher (42), Kodelöschung aus dem Einrichtungsspeicher (42) von vorangehenden nicht mehr nützlichen Kodes und Lesen von in dem Einrichtungsspeicher (42) gespeicherten Kodes beziehen, um sie mit einem Fernsteuersignal an die Übertragungseinheit (54) zu senden um sie als neue Kodes weiterzuleiten, die in dem nichtflüchtigen Speicher des Fernsteuerempfängers (18) zu speichern sind.

2. Fernsteuersystem nach Anspruch 1, **dadurch gekennzeichnet, daß** die Drucktastenanordnung aus einer Tastatur (32) ähnlich zu den Tastaturen, die zum Wählen von Telefonnummern benutzt werden, besteht, auf denen Zahlen entsprechend zu Tätigkeiten getippt werden, die von der Hilfseinrichtung (30) auszuführen sind.

3. Fernsteuersystem nach Anspruch 1, **dadurch gekennzeichnet, daß** die Drucktastenanordnung aus einer Mehrzahl von einzelnen Drucktasten (33a-d) besteht, von denen jede für eine auszuführende Tätigkeit geeignet ist.

4. Fernsteuersystem nach Anspruch 2 oder 3, **dadurch gekennzeichnet, daß** die Übertragungseinheit (54) aus einem Radiosender (54b) besteht, der durch das kodierte Signal (102) amplitudenmoduliert ist, das von einem Ausgang (52) des Mikroprozessors (38) kommt und zu senden ist, das in eine Radioantenne (28a) gefüttert wird, die in dem Hilfssender (30) selbst enthalten ist.

5. Fernsteuersystem nach Anspruch 2 oder 3, **dadurch gekennzeichnet, daß** die Übertragungseinheit (54a) aus einem Pufferverstärker (55) besteht, der mit dem Ausgang des Mikroprozessors (38) verbunden ist, der das zu sendende kodierte Signal (102) ausgibt, der zum Senden der Pulse des kodierten Signales (102) auf einem Kabel oder einer Doppelleitung (28) für Telekommunikation geeignet ist.

6. Fernsteuersystem nach vorhergehenden Ansprüchen, **dadurch gekennzeichnet, daß** der Mikroprozessor (38) einen anderen Ausgang (56) aufweist, der zum Freigeben der Tätigkeit eines Summers (58) benutzt wird, der über die Betätigung einer Taste der Tastatur (32) informiert.

7. Fernsteuersystem nach Anspruch 6, **dadurch gekennzeichnet, daß** der Mikroprozessor (38) einen anderen Ausgang (60) aufweist, der zum Freigeben der Tätigkeit eines Beleuchtungsmittels (62) benutzt wird, das zum Beleuchten der Tastatur (32) nützlich ist, wenn irgendeine Taste davon betätigt ist.

8. Fernsteuersystem nach Anspruch 7, **dadurch gekennzeichnet, daß** das oben erwähnte Beleuchtungsmittel (62) aus einer Anordnung von lichtemittierenden Dioden (LED) besteht, die durch einen Transistor (61) getrieben werden, der wiederum durch den Ausgang (60) getrieben wird, der das Beleuchtungsmittel freigibt.

9. Fernsteuersystem nach Anspruch 8, **dadurch gekennzeichnet, daß** der Transistor (61), der die lichtemittierenden Dioden (62) treibt, ebenfalls die Stromversorgung für den Breitband- und Niederverstärkungsempfänger (46) bestätigt, der in dem Hilfssender (30) enthalten ist.

10. Fernsteuersystem nach Ansprüchen 1-4 und 6-8, **dadurch gekennzeichnet, daß** der Breitband- und Niederverstärkungsempfänger aus einem aperiodischen Radiofrequenzverstärker (82) besteht, der von einem Detektor (86, 87) und von einem Puffer (92, 93) gefolgt wird, der das kodierte erfaßte Signal in ein Rechteckwellensignal (94, 95) wandeln kann, das als ein Digitalkode benutzbar ist.

11. Fernsteuersystem nach Ansprüchen 1-4 und 6 bis 10, **dadurch gekennzeichnet, daß** der Radiosender (54b), der als Übertragungseinheit benutzt wird, aus einem Treiberoszilator (110), der durch einen piezoelektrischen Quarz (112) frequenzstabilisiert ist, einem Modulator/Manipulator (114), der durch das kodierte Digitalsignal (102) gesteuert wird, und einem Leistungsradiofrequenzversträrker (116), der eine Sendeantenne (28a) füttert, besteht.

12. Fernsteuersystem nach Anspruch 11, **dadurch gekennzeichnet, daß** die Sendeantenne (28a) einfach aus einer Resonanzschaltung (118) besteht, die einen Induktor und einen Kondensator (120) aufweist, dessen induktive Komponente als eine Antenne tätig ist, da sie aus einem Induktor besteht mit einer ausreichenden Streuinduktanz zum Betrieb als eine Strahlungsantenne.

## Revendications

1. Système de télécommande comportant un récepteur de télécommande (18) muni d'une mémoire non-volatile, et **caractérisé en ce qu'**il est muni d'un dispositif de service (30) comportant un microprocesseur (38), une unité de transmission (54), un récepteur à large bande et à faible gain (46) capable de recevoir des signaux radio codés et de détecter leurs codes, d'une mémoire non-volatile (42) capable de mémoriser un code détecté par le récepteur de dispositif (46), d'un ensemble de boutons-poussoirs (32, 33) capable d'envoyer des signaux de commande au microprocesseur (38) pour donner des ordres concernant la réception des codes par le récepteur de dispositif (46), l'enregistrement des codes dans la mémoire de dispositif (42), la suppression des codes à partir de la mémoire de dispositif (42) des codes précédents qui ne sont plus utiles et la lecture de codes mémorisés dans la mémoire de dispositif (42) pour les envoyer avec un signal de télécommande à l'unité de transmission (54) afin de les renvoyer en tant que nouveaux codes à mémoriser dans la mémoire non-volatile du récepteur de télécommande (18).

2. Système de télécommande selon la revendication 1, **caractérisé en ce que** l'ensemble de boutons-poussoirs est constitué d'un clavier (32), similaire aux claviers utilisés pour former les numéros de téléphone, sur lequel peuvent être tapés des numéros correspondant à des opérations à exécuter par l'émetteur de service (30).

3. Système de télécommande selon la revendication 1, **caractérisé en ce que** l'ensemble de boutons-poussoirs est constitué d'une pluralité de boutons-poussoirs uniques (33a à 33d), chacun étant approprié pour une opération à exécuter.

4. Système de télécommande selon les revendications 2 et 3, **caractérisé en ce que** l'unité de transmission (54) est constituée d'un émetteur radio (54b), l'amplitude modulée par le signal codé (102), provenant d'une sortie (52) du microprocesseur (38), et à transmettre, alimentant une antenne radio (28a) incorporée à l'intérieur de l'émetteur de service (30).

5. Système de télécommande selon les revendications 2 et 3, **caractérisé en ce que** l'unité de transmission (54a) est constituée d'un amplificateur tampon (55), relié à la sortie du microprocesseur (38) émettant le signal codé (102) à transmettre, adapté pour envoyer les impulsions du signal codé (102) sur un câble ou sur une ligne jumelée (28) de télécommunications.

6. Système de télécommande selon l'une quelconque des revendications précédentes, **caractérisé en ce que** le microprocesseur (38) a une autre sortie (56) utilisée pour valider l'actionnement d'un vibreur (58) informant sur l'actionnement d'une touche du clavier (32).

7. Système de télécommande selon la revendication 6, **caractérisé en ce que** le microprocesseur (38) a une autre sortie (60) utilisée pour valider l'actionnement de moyens d'éclairage (62) utilisés pour éclairer le clavier (32) lorsque l'une quelconque de ses touches est actionnée.

8. Système de télécommande selon la revendication 7, **caractérisé en ce que** les moyens d'éclairage (62) mentionnés ci-dessus sont constitués d'un ensemble de diodes électroluminescentes (LED) commandées par un transistor (61) à son tour commandé par la sortie (60) validant les moyens d'éclairage.

9. Système de télécommande selon la revendication 8, **caractérisé en ce que** le transistor (61) commandant les diodes électroluminescentes (62) confirme également l'alimentation en courant du récepteur à large bande et à faible gain (46) contenu dans l'émetteur de service (30).

10. Système de télécommande selon les revendications 1 à 4 et 6 à 8, **caractérisé en ce que** le récepteur à large bande et à faible gain est constitué d'un amplificateur apériodique de signaux radiofréquences (82) suivi d'un détecteur (86, 87) et d'un tampon (92, 93) capables de transformer un signal détecté codé en un signal d'onde carrée (94, 95) pouvant être utilisé en tant que code numérique.

11. Système de télécommande selon les revendications 1 à 4 et 6 à 10, **caractérisé en ce que** l'émetteur radio (54b) utilisé en tant qu'unité de transmission est constitué d'un oscillateur d'attaque (110) stabilisé en fréquences par un quartz piézoélectrique (112), d'un modulateur/manipulateur (114) commandé par le signal numérique codé (102) et d'un amplificateur radiofréquence de puissance (116) alimentant une antenne émettrice (28a).

12. Système de télécommande selon la revendication 11, **caractérisé en ce que** l'antenne émettrice (28a) est constituée simplement d'un circuit résonant (118) comportant un inducteur et un condensateur (120), dont le composant inducteur fonctionne comme une antenne du fait qu'il est constitué d'un inducteur ayant une inductance parasite suffisante pour fonctionner comme une antenne en cours d'émission.
